Europäisches Patentamt

(19) European Patent Office

Office européen des brevets

(11) Publication number: **0 124 333**
**B1**

(12) **EUROPEAN PATENT SPECIFICATION**

(45) Date of publication of patent specification: **08.02.89**

(51) Int. Cl.⁴: **B 01 J 19/00**

(21) Application number: **84302743.4**

(22) Date of filing: **24.04.84**

(54) Apparatus for controlling polymerisation reactors.

(30) Priority: **25.04.83 US 488283**

(43) Date of publication of application:
**07.11.84 Bulletin 84/45**

(45) Publication of the grant of the patent:
**08.02.89 Bulletin 89/06**

(84) Designated Contracting States:
**DE FR GB IT**

(56) References cited:
**FR-A-2 318 674**
**US-A-3 676 653**
**DIGITAL COMPUTER APPLICATIONS TO PROCESS CONTROL, PROCEEDINGS OF THE 5th IFAC INTERNATIONAL CONFERENCE, 14th-17th June 1977, The Hague, pages 551-557, H.R. Van Nauta Lemke, North-Holland Publishing Co., Amsterdam, NL; P.D. ROBERTS: "Integrated system optimisation and parameter estimation of a chemical reactor using a multilevel approach"**

(73) Proprietor: **THE BABCOCK & WILCOX COMPANY**
**1010 Common Street P.O. Box 60035**
**New Orleans Louisiana 70160 (US)**

(72) Inventor: **Agarwal, Suresh C.**
**5686 Broadview Road Apt. No. 2402**
**Parma Ohio 44134 (US)**

(74) Representative: **Cotter, Ivan John et al**
**D. YOUNG & CO. 10 Staple Inn**
**London WC1V 7RD (GB)**

Courier Press, Leamington Spa, England.

## Description

This invention relates to apparatus for controlling polymerisation reactors.

Low density polyethylene is an important basic polymer in a consumer oriented society. Over the years, its manufacturing processes have changed from the use of continuous stirred tank reactors to the use of tubular reactors for polymerisation, in large part due to process economics. In the tubular reactor, heat removal is accomplished by externally cooling the reactor tube.

The use of tubular reactors for ethylene polymerisation, instead of autoclave type reactors, is disclosed in *Polyolefin Production Processes—Latest Developments*, M.P. Sittig, Noyes Data Corp., Park Ridge, N. J., USA., 1976.

Most low density polyethylene is made at high pressures ranging from 1,000 to 3,350 atm. pressure using a free radical initiator/catalyst such as peroxides, nitrogen compounds and metallic catalysts. The basic steps in the process are the initial compression of purified ethylene to the reactor pressures, introduction of free radical initiator/catalyst at some stage of compression, polymerisation and removal of exothermic heat of reaction, reaction mixture let down, product separation and finishing. A tubular reactor for accomplishing at least some of these steps is disclosed in US—A—4 008 049 (Clemmer *et al*).

Since ethylene polymerisation is an exothermic process, exothermic heat must be removed. Such heat removal has been achieved by externally cooling the reactor tube, and feeding a portion of cool ethylene feed as a starting material to a high temperature reactor zone.

It is also important that ethylene feed to the reactor be 99.9% pure and acetylene free. Commonly acceptable limits for acetylene are less than 10 ppm. Ethylene gas feed should also contain less than 440 ppm oxygen since higher oxygen content results in lower reaction rate and thus lower polymer yield.

The initiator/catalyst, as noted above, are free radicals and predominantly oxides and peroxides. From 0.01 to 10% by weight may be added, based upon desired polymer weight. Liquid catalyst is injected at multiple points in connecting lines between one or more compressors and the reactor, at a temperature higher than the polymer melting point.

Temperatures of 180 to 200°C are commonly used in high pressure polymerisation. Actual operating temperature depends on the temperature required for thermal decomposition of catalyst to provide free radicals for initiation of polymerisation.

This reactor operating temperature is well above the critical temperature of ethylene. High operating pressures are therefore required to force the ethylene molecules together and ensure that free radicals will collide with an ethyl molecule during their short lifetime. The above-mentioned operating pressure range is therefore used in the low density polyethylene process.

Major problems exist in known ethylene polymerisation processes using tubular reactors.

One of these problems is that product quality is achieved by maintaining reactor temperature at a pre-specified level. That is, there is no direct product quality control. This approach results in significant fluctuations in product quality due to variations in reactor temperature caused by discharging reactor products through let down valves. A polymer-ethylene mixture is discharged from the reactor tube by opening and closing such a let down valve to lower reactor pressure intermittently. This causes pressure fluctuations of 19.61 to 98.10 MPa (200 to 1,000 kgf/cm²).

Another problem is that the application of excessive cooling lowers reactor cooling zone temperature and results in polymer deposits on the tube wall. Pressure drops appear as a consequence and, in a worst case, the reactor tube may become clogged. This may result in damage to the equipment.

A further problem is that the amount of catalyst added is based on feed flow rate to the reactor. This is fixed for the operation since it is considered independent of feed flow rate as the catalyst control system does not account for variations in the feed flow rate.

A still further problem of the prior art is that significant amounts of operator attention are required during the process. This is because an operator must not only observe the process behaviour but must also adjust set points for temperature and catalyst, based on his knowledge of the process and a relationship of product quality vs. reactor temperature and catalyst flow rate vs. feed flow rate.

According to the invention there is provided apparatus for controlling a polymerisation reactor having a feed line for a raw material to be polymerised, cooling means for cooling the reactor using a flow of coolant, and an exit line for a product of polymerisation in the reactor, the apparatus comprising:

a product separator connected in the exit line downstream of the reactor for separating the product from the raw material;

a quality sensor for sensing the actual quality of the product in the exit line downstream of the product separator;

quality controls means connected to the quality sensor for receiving a desired product quality set point and comparing it with the actual quality of the product to generate a desired temperature value of the reactor;

temperature sensing means associated with the reactor for sensing a representative temperature thereof;

temperature control means connected to the temperature sensing means and the quality control means for comparing the representative temperature of the reactor with the desired temperature value therefor to generate a coolant flow value, the temperature control means being connected to the cooling means for controlling the coolant flow to the reactor in accordance with the coolant flow value;

a raw material flow regulator in the feed line for regulating an amount of raw material supplied to the reactor;

a raw material concentration sensor in the exit line between the reactor and the product separator for sensing an amount of raw material admixed with product in the exit line; and

production rate control means connected to the raw material concentration sensor and to the raw material flow regulator for receiving a desired production rate as a set point and comparing it with an actual production rate determined as a function of the raw material concentration to generate a raw material feed flow rate value for application to the raw material flow regulator for regulating the amount of raw material to the reactor.

The control of the coolant flow in accordance with the coolant flow value can enable the reduction of fluctuations in product quality as well as deposits of polymer on walls of the reactor due to excessive cooling.

The present invention may be so embodied as to provide a system or apparatus and a method for controlling and optimising a polymerisation reactor, particularly a tube reactor for polyolefin, and more particularly polyethylene production. Preferred such systems and methods described hereinbelow are applicable to controlling a low density polyethylene reaction in a tubular reactor so that product quality is maintained, temperature control is utilised to avoid the occurrence of conditions which may damage the equipment, and a desired production rate is achieved.

The apparatus is preferably so constructed that a desired production rate set point can be set manually and utilised in a production controller which compares the set point to actual production as determined by raw material concentration in the exit line of the reactor, to control all material feed flow to the reactor whereby variations in raw material polymerisation rate is considered to avoid fluctuations in the actual production rate.

The apparatus preferably comprises catalyst supply means for supplying catalyst to various points in the feed line of the reactor, control being effected on the basis of total feed flow to the reactor.

The invention is preferably so implemented as to maximise polymerisation, in particular to maximise ethylene conversion in the manufacturing process for low density polyethylene, by optimising certain process parameters such as catalyst flow rate, reactor temperature, coolant flow rate and reactor exit temperature.

Preferred apparatus embodying the invention for controlling and optimising a polymerisation reactor is simple in design, rugged in construction and economical to manufacture.

The invention will now be further described, by way of illustrative and non-limiting example, with reference to the accompanying drawings, in which:

Figure 1 is a block diagram of apparatus embodying the invention for controlling a low density polyethylene reactor;

Figure 2 is a block diagram of portions of the apparatus of Figure 1 for product quality control and pressure control;

Figure 3 is a block diagram of portions of the apparatus of Figure 1 for controlling the addition of catalyst to the reactor and the production rate of the reactor;

Figure 4 is a block diagram showing elements for implementing logic for catalyst addition and production rate control in apparatus embodying the invention;

Figure 5 is a block diagram showing elements for implementing logic for product quality control in apparatus embodying the invention;

Figure 6 is a block diagram showing an ethylene polymerisation reactor with control apparatus in accordance with a further embodiment of the invention; and

Figure 7 is a block diagram showing elements of a control computer system used in the embodiment of Figure 6.

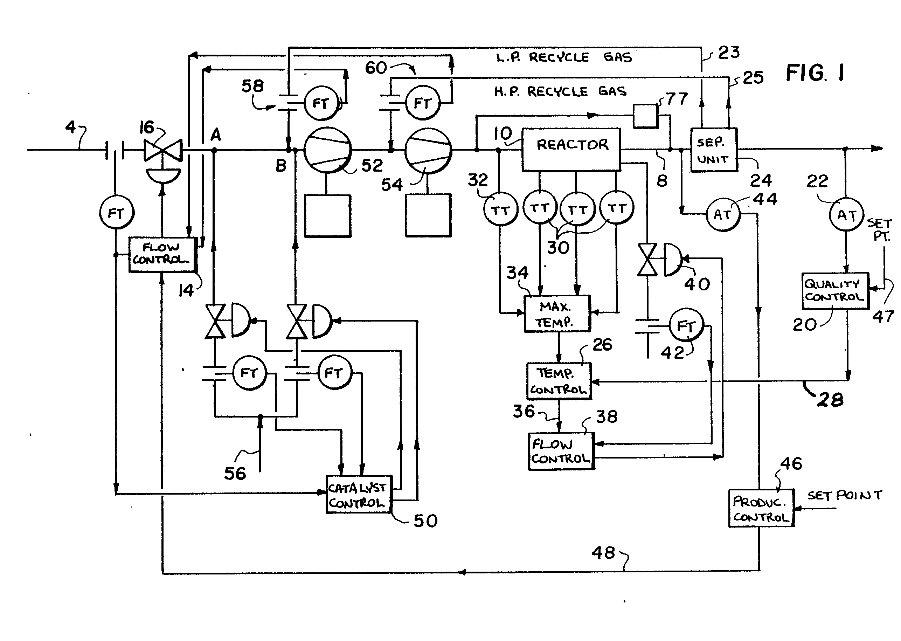

Referring to the drawings, Figure 1 shows a control apparatus or arrangement for a tubular reactor 10 having a feed line 4 for a raw material which in this case is ethylene. The tubular reactor 10 is for the low density polymerisation of ethylene into polyethylene.

An exit line 8 from the reactor 10 supplies a mixture of ethylene and its polymer to a product separator or separator unit 24. In known fashion, a primary compressor 52 compresses the ethylene gas and the gas is further compressed by a high pressure compressor 54 before it is supplied to the reactor 10.

A low pressure recycling arrangement or circuit generally designated 58 receives low pressure recycled ethylene gas from the product separator 24 over a line 23 and supplies it to the feed line 4 upstream of the primary compressor 52. In a similar fashion, high pressure recycled gas is provided over a line 25 to a high pressure recycling arrangement or circuit generally designated 60 and supplied to a point in the feed line 4 upstream of the high pressure compressor 54.

Complete control of the tubular reactor 10 is achieved using a product quality control unit 20, a temperature control unit 26, a production rate control unit 46, a catalyst control unit 50 and a pressure control unit 77.

Product quality is controlled by manipulating reactor temperature. Moreover, a temperature control is essential for controlling ethylene conversion, removing heat of reaction, and avoiding reactor tube plugging due to polymer deposits.

As shown in Figure 1, the quality control unit 20 receives a product quality set point over a line 47 and compares it with an actual product quality sensed by a product quality sensor 22 at a point downstream of the product separator 24. An output of the product quality control unit 20 corresponds to a desired reactor temperature and is applied to the temperature control unit 26 over a line 28. The desired reactor temperature functions as a set point for the temperature control unit 26, which receives an actual temperature value from a maximum temperature unit 34. The temperature control unit 26 may also utilise a representative reactor temperature value to generate a desired flow rate value for coolant to be supplied by a coolant flow valve 40 controlled by a flow controller 38 connected to the temperature control unit 26. The desired flow value is applied over a line 36 with coolant flow information being provided by a flow transmitter 42 back to the flow controller 38.

The maximum or representative reactor temperature is provided by a plurality of temperature sensors 30 for sensing temperatures along the length of the reactor 10, and an input temperature sensor 32.

The control scheme carried out by the apparatus of Figure 1 reduces fluctuations in product quality since it is the primary control variable and the temperature set point is determined for a desired product quality. Also, the desired coolant flow rate is determined by the temperature control unit 26 so that excessive cooling is avoided. This in turn reduces polymer deposits in the reactor tube which result from excessive cooling.

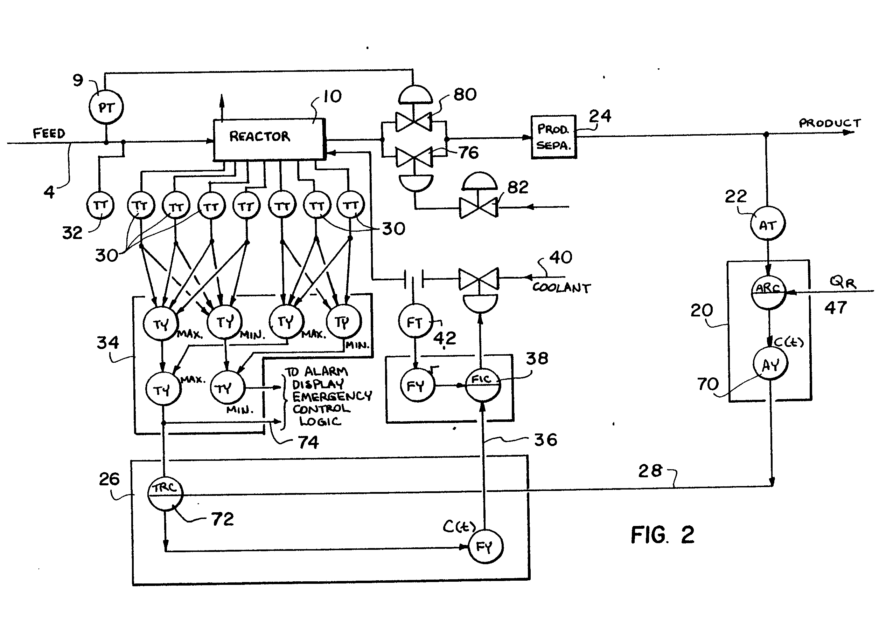

Figure 2 shows in greater detail a preferred form of cascade control system for temperature quality control that can be used in the apparatus of Figure 1.

The desired product quality is compared with the actual product quality in the product quality control unit 20. A suitable delay between the reactor 10 and the point of quality measurement is applied by a delay element 70. A similar delay feature is provided in the temperature control unit 26, which includes a temperature controller 72.

The maximum temperature unit 34 provides both maximum and minimum temperature values for the reactor 10, which values can be provided over lines 74 for alarm, display and emergency control functions. The maximum temperature value is also provided to the temperature control unit 26.

Figure 2 also illustrates the pressure control unit 77, which facilitates discharge of a polymer-ethylene mixture from the reactor 10 via a let down valve arrangement comprising valves 76, 80, 82.

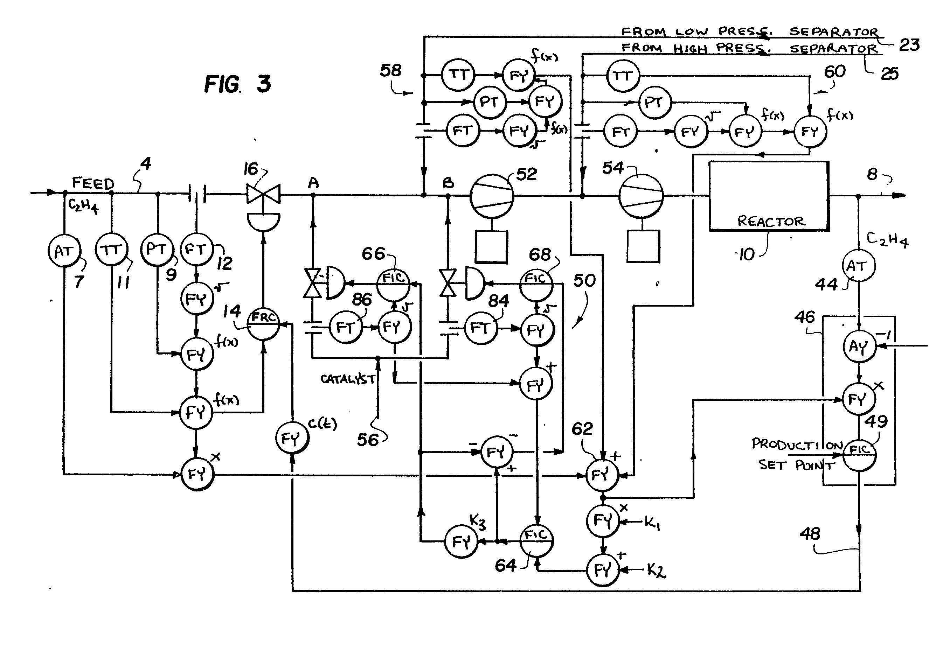

Catalyst and production rate control elements of the apparatus of Figure 1 are shown in Figure 3. A desired production rate set point is manually entered in the production rate control unit 46 and an actual production rate is determined from ethylene concentration sensed by a concentration transmitter 44. The total feed flow rate for ethylene is also provided to the production control unit 46. For this purpose, a summation of flows in the high and low recycling arrangements or circuits 58, 60, as well as the feed flow from a flow transmitter 12, is taken in a summation unit 62 and applied to the production rate control unit 46.

An output on a line 48 of the production rate control unit 46 acts as a set point for a fresh ethylene flow controller 14 which controls a valve 16 in the feed line 4.

In this way, variations in ethylene polymerisation rate are taken into account and the actual production rate does not fluctuate significantly. The production rate control unit 46 includes a flow controller 49 which receives the desired product rate set point over the line 47.

Catalyst flow from a catalyst supply line 56 is controlled by the catalyst control unit 50 which supplies catalyst to a plurality of points (labelled A and B) on the feed line 4. The amount of catalyst added to the reactor feed stream is a function of the quantity of ethylene entering the reactor. The total flow rate is again provided by the summation unit 62. This provides a set point for a total catalyst flow controller 64, which receives inputs from catalyst flow transmitters 84, 86. An output signal from the controller 64 is proportioned for catalyst flow to the points A and B over controllers 66 and 68, respectively.

The apparatus or system in general can be simplified by eliminating sensors whose values are constant due to up/downstream control. For example, the ethylene flow pressure is normally held constant, so that a pressure transmitter 9 can be eliminated as it is shown in Figure 3. A temperature transmitter 11 and an ethylene concentration transmitter 7 are also provided to modify the flow value from the flow transmitter 12 to provide an accurate value for ethylene flow for the summation unit 62. Similar signals are utilised in the recycling arrangements 58 and 60.

Advantages of the above-described integrated control apparatus or system for a tubular reactor in the manufacture of low density polyethylene, in particular, includes the requirement of only two set points, one for quality and one for production rate. Consequently, a reduction in operator attention is permitted.

A close control of product quality as a function of reactor temperature is also provided, as well as the maintenance of catalyst addition at a desired level.

Close temperature control also reduces the occurrence of conditions which may damage the reactor equipment.

The apparatus may be implemented using Bailey 7000 Electronic Analog Instrumentation. A microprocessor based on the Network 90 control computer can also be used for control, alarm, calculation and operation interface. Network 90 is a trademark of the Bailey Meter Co.

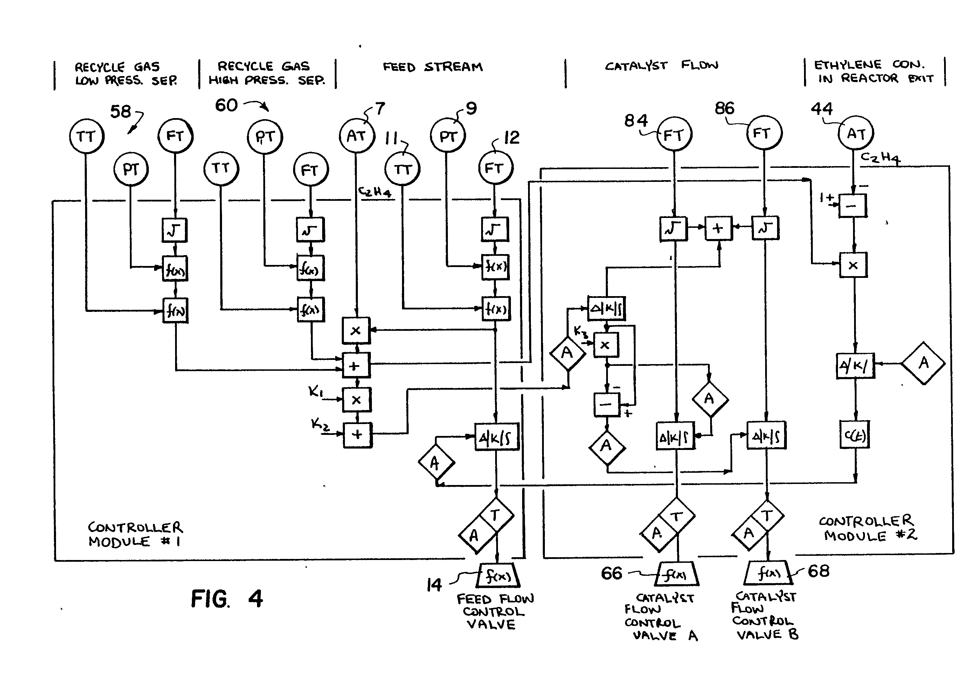

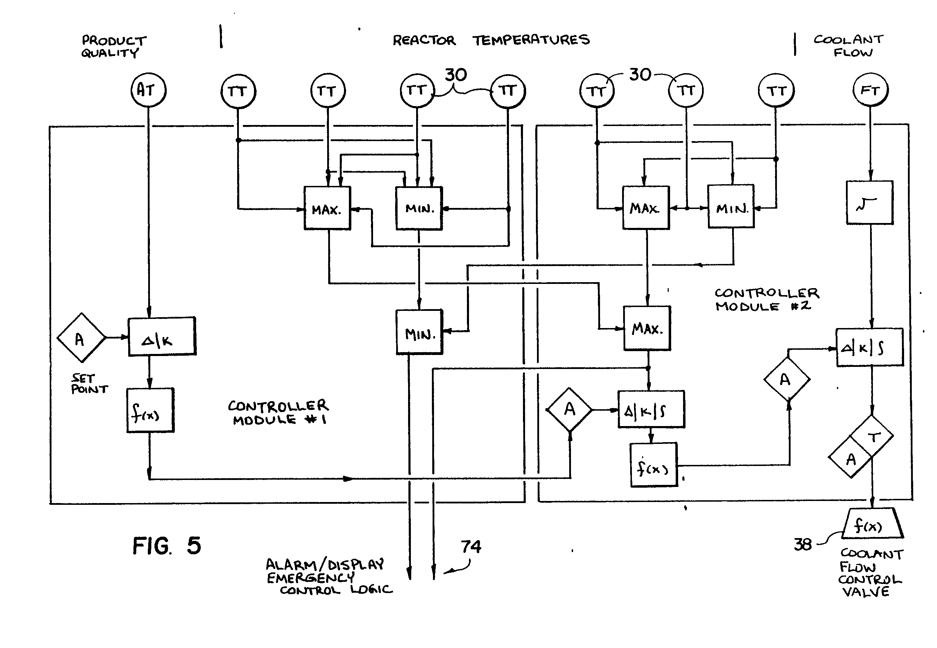

Figures 4 and 5 illustrate the use of a Network 90 control module (product specification E93-906) for implementing apparatus embodying the invention. Operator interface may be provided by Digital Control Stations (product specification E93-902), which are dedicated panel-board devices, or by a CRT based Operator Interface Unit (product specification E93-901).

The elements in Figures 4 and 5 are labelled with numerals corresponding to those in Figures 1 to 3, and with symbols to indicate functions to be achieved by each element.

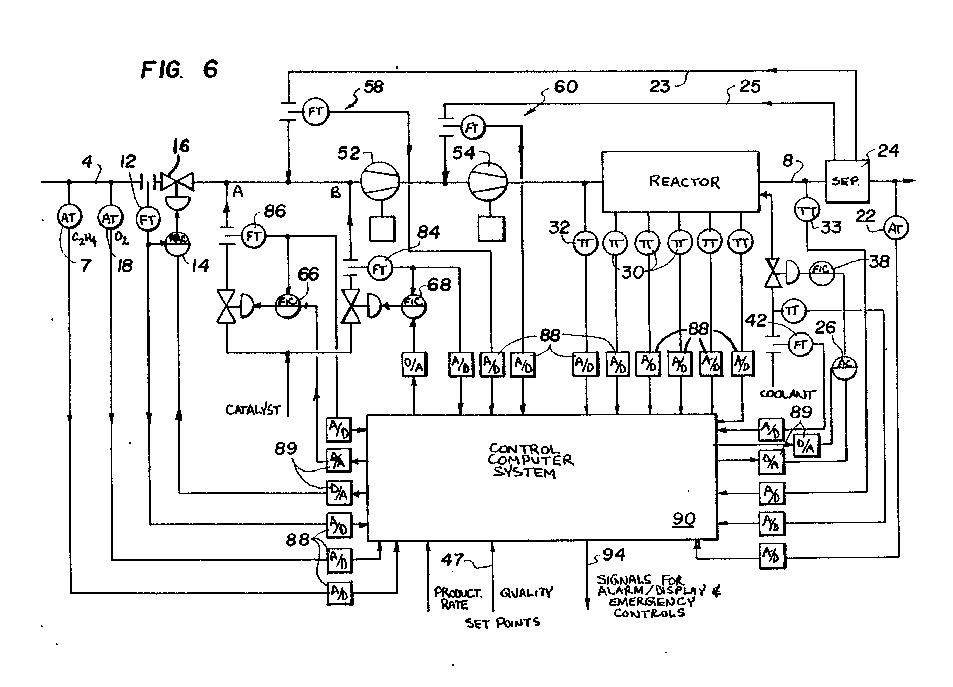

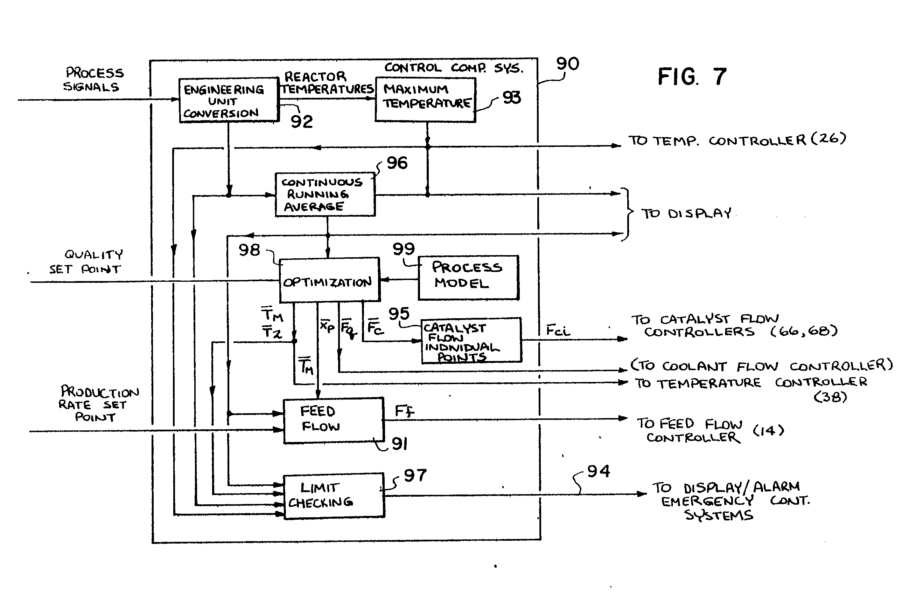

Figures 6 and 7, where corresponding numerals signify the same or similar parts as in Figures 1 to 3, show an optimising control apparatus embodying the invention for ethylene conversion.

In general, control systems are based on a fixed ethylene conversion per pass through the reactor, due to the importance of heat removal. The amount of conversion per pass is actually lower than the recommended value for plant operation and significantly lower than plant design values. This is due to the fact that operating personnel wish to maintain reactor operations well within safe limits, which is well justified. Lower conversion per pass however, results in increased plant operating cost due to recompression of recycled gases from low and high pressure separators, and interstage cooling during compression.

The embodiment of the invention as shown in Figures 6 and 7 provides an optimising control which maximises conversion per pass within the constraints placed by reactor cooling, production rate, polymerisation reaction, and the like.

To better understand the apparatus, the following process analysis should be considered.

The total amount of catalyst to be added to the reactor feed stream is a function of feed flow rate, maximum reactor temperature and desired product quality. Functionally, this relationship is expressed by:

$$F_c = f_1[F_f, T_m, Q_r] \qquad (1)$$

where:

$F_c$ = total catalyst flow rate (kg/h);
$F_f$ = total ethylene flow rate (kg/h);
$T_m$ = maximum reactor temperature (K); and
$Q_R$ = desired product quality.

Equation (1) can be obtained either by regression analysis of plant operating data and catalyst data provided by its manufacturer for a specific catalyst.

It should be noted that operating pressure does not affect catalyst flow since reactor pressure is fixed and constant due to compressor operation. Contributions to pressure fluctuations have therefore been omitted.

As catalyst is added at several points in the feed stream (the points A and B in Figure 6), the flow at each point being given by:

$$F_{ci} = P_i F_c \qquad (2)$$

where:

$F_{ci}$ = catalyst flow at a point i (kg/h); and
$P_i$ = fraction of total flow added at the point i (a constant).

Also:

$$\Sigma P_i = 1 \qquad (3)$$

$$\Sigma F_{ci} = F_c \qquad (4)$$

The constraint on total catalyst flow is established by a maximum and minimum flow allowed, as follows:

$$F_{cmin} \leqslant F_c \leqslant F_{cmax} \qquad (5)$$

In the reactor 10, conversion paths for ethylene polymerisation is a function of several variables, and is functionally given as:

$$X_p = f_2[X_E, A_1, E_1, T_m, F_c, F_f, T_i, T_2, T_{c1}, F_q, Q] \qquad (6)$$

where:

$X_p$ = ethylene conversion per pass;
$X_E$ = ethylene concentration in reactor feed stream;
$A_1$ = pre-exponential factor for reaction rate constant;
$E_1$ = activation energy for reaction rate constant;
$A_1$, $E_1$ = parameters related to catalyst characteristics, which can be determined by regression analysis of plant operating data;
$T_m$ = maximum reactor temperature (K);
$F_c$ = total feed flow rate (kg/h);
$T_i$ = temperature of reactor feed stream (K);
$T_2$ = temperature of reactor exit stream (K);
$T_{c1}$ = inlet temperature of reactor coolant;
$F_q$ = coolant flow rate (kg/h); and
$Q$ = product quality.

Equation (6) can be obtained from state of the art knowledge as found for example, in *Theory of Free Radical Polymerization*, K. S. Bagdasar'yan, 1968 and *Chemical Engineering Kinetics*, J. M. Smith, McGraw Hill, 1970.

The limits on the variables in equation (6) are as follows:

$$0 \leqslant X_p \leqslant X_{p\,max} \qquad (7)$$

$$T_{m\,min} \leqslant T_m \leqslant T_{m\,max} \qquad (8)$$

$$T_{2\,min} \leqslant T_2 \leqslant T_{2\,max} \qquad (9)$$

$$F_{q\,min} \leqslant F_q \leqslant F_{q\,max} \qquad (10)$$

$$Q_{min} \leqslant Q \leqslant Q_{max} \qquad (11)$$

The quality of the low density polyethylene is a function of maximum reactor temperature and catalyst addition to the reactor feed stream. For a given feed flow rate, this relationship is functionally given as:

$$Q = f_3[T_m, F_c] \qquad (12)$$

Equation (12) can be determined by regression analysis of operating data.

One of the objectives of an ethylene manufacturing process is to minimise variations in product quality due to fluctuations in other operating variables. Consequently, it is desired that:

$$Q_R - Q = 0 \qquad (13)$$

where:

$Q_R$ = desired product quality; and

$Q$ = actual product quality.

From equations (12) and (13), we have:

$$Q_R - f_3[T_m, F_c] = 0 \qquad (14)$$

Low density polyethylene production rate is dependent on total feed flow rate, ethylene concentration in the reactor's feed stream and conversion per pass in the reactor. This relationship is functionally expressed as:

$$P = f_4[F_f, X_E, X_p] \qquad (15)$$

Thus, the problem to be overcome in optimising the reactor control is to maximise

$$P_2[X_E, A_1, E_1, T_m, F_c, F_f, T_1, T_2, T_c, F_q, Q]$$

with respect to $T_m, F_c, F_q$ and $T_2$ such that the following limiations are satisfied:

$$F_c = F_1[F_f, T_m, Q_R];$$

$$Q_R - f_3[T_m, F_c] = 0;$$

$$F_{c_{min}} \leqslant F_c \leqslant F_{c_{max}};$$

$$F_{q\ min} \leqslant F_q \leqslant F_{q\ max};$$

and

$$T_{2\ min} \leqslant T_2 \leqslant T_{2\ max}.$$

A solution to the optimisation problem can be obtained by a known optimisation algorithm discussed in *Optimisation—Theory and Practice*, G. S. G. Beveridge and R. S. Schechter, McGraw Hill, New York, N.Y., 1970.

This analysis gives the following values:

catalyst flow rate $\bar{F}_c$;

reactor temperature $\bar{T}_m$;

coolant flow rate $\bar{F}_q$;

reactor exit temperature $\bar{T}_2$; and

maximum conversion $\bar{X}_p$ (value of function $f_2$).

These values are utilised in the control apparatus or system shown in Figures 6 and 7.

The control apparatus utilises a control computer 90 which receives inputs from the various sensors of the apparatus through analog to digital (A/D) converters 88. Control outputs from the control computer 90 to the plant are interfaced through digital to analog (D/A) converters 89.

Signals for alarm, display and emergency control are provided over a line 94.

Major blocks of the control apparatus or system of Figure 6 are shown in Figure 7.

All measured process signals are converted into engineering units and processed for noise in an engineering unit conversion block 92, and using state of the art methodology. Although not shown in Figures 6 and 7, a signal is also applied to the block 92 from an ethylene concentration sensor corresponding to the sensor 44 shown in Figure 1. Reactor temperature data, from the reactor temperature sensors 30, the input temperature sensor 32 and an output temperature sensor 33, are processed in a block 93 to obtain a maximum temperature. An output of the block 93 is provided to the temperature control unit 26 which controls flow of coolant over the controller 38 and the valve in the coolant circuit.

The outputs from the blocks 92 and 93 are provided to a block 96 for obtaining a continuous running average of the processed data. Signals are sampled at intervals of $\Delta T$ minutes. The outputs of blocks 92, 93 and 96 are also provided to a limit checking block 97 for detecting an alarm condition and providing an alarm and emergency control signal over the line 94.

An optimisation program for an optimised process model is provided from a process model 99. The process model 99 is established according to the foregoing process analysis.

The optimisation program is executed every $\Delta T$ minutes, which is greater than or equal to five minutes and less than or equal to 15 minutes. This execution period is established using the continuous running average data of the block 96 and the desired quantities for the various parameters obtained in an optimisation block 98.

The optimisation block 98 thus establishes a desired catalyst flow rate $\bar{F}_c$, desired temperature $\bar{T}_m$, maximum conversion $\bar{X}_p$, desired maximum coolant flow rate $\bar{F}_q$ and desired reactor exit temperature $\bar{T}_2$.

The maximum temperature $\bar{T}_m$ is outputted as a control signal for the temperature control unit 26, acting as a set point. The temperature control unit 26 generates the desired coolant flow rate set point for the flow controller 38, which manipulates the coolant flow rate to the reactor 10 as noted above.

In another embodiment of the invention, the desired coolant flow $\bar{F}_q$ can be directly outputted to the coolant flow rate controller (not shown), thus eliminating the temperature control unit 26.

The maximum conversion signal $\bar{X}_p$ is provided through a feed flow block 91 where the desired feed flow rate for the specified product rate is determined by expression (15) above and outputted to the feed (fresh ethylene) flow controller 14.

The maximum catalyst flow signal $\bar{F}_c$ is provided over a block 95 to control catalyst flow to the individual points A and B in the feed stream. Catalyst flow at each point of addition is determined by equation (2) above and values for $P_i$ are manually entered. The output of the block 95 is provided to the catalyst flow controllers 66 and 68.

To provide the required signals, in addition to the flow transmitter 12 and the ethylene concentration transmitter 7 on the feed stream 4, an oxygen concentration transmitter 18 is provided since this variable affects ethylene conversion, as shown in equation (6) above, as well.

## Claims

1. Apparatus for controlling a polymerisation reactor (10) having a feed line (4) for a raw material to be polymerised, cooling means for cooling the reactor using a flow of coolant, and an exit line (8) for a product of polymerisation in the reactor, the apparatus comprising:

a product separator (24) connected in the exit line (8) downstream of the reactor (10) for separating the product from the raw material;

a quality sensor (22) for sensing the actual quality of the product in the exit line (8) downstream of the product separator (24);

quality control means (20; 90) connected to the quality sensor (22) for receiving a desired product quality set point and comparing it with the actual quality of the product to generate a desired temperature value of the reactor;

temperature sensing means (30, 34; 30, 93) associated with the reactor (10) for sensing a representative temperature thereof;

temperature control means (26) connected to the temperature sensing means and the quality control means for comparing the representative temperature of the reactor with the desired temperature value therefor to generate a coolant flow value, the temperature control means being connected to the cooling means for controlling the coolant flow to the reactor in accordance with the coolant flow value;

a raw material flow regulator (14, 16) in the feed line (4) for regulating an amount of raw material supplied to the reactor (10);

a raw material concentration sensor (44) in the exit line (8) between the reactor (10) and the product separator (24) for sensing an amount of raw material admixed with product in the exit line; and

production rate control means (46; 90) connected to the raw material concentration sensor (44) and to the raw material flow regulator (14, 16) for receiving a desired production rate as a set point and comparing it with an actual production rate determined as a function of the raw material concentration to generate a raw material feed flow rate value for application to the raw material flow regulator for regulating the amount of raw material to the reactor.

2. Apparatus according to claim 1, wherein the temperature sensing means (30, 34; 30, 93) is operative to sense a maximum temperature of the reactor (10) which forms the representative temperature thereof.

3. Apparatus according to claim 1 or claim 2, wherein the quality sensor (22) is operative to sense a concentration of raw material in the exit line (8) as a measure of actual product quality.

4. Apparatus according to claim 1, claim 2 or claim 3, wherein the product separator (24) is connected to the exit line (8) downstream of the raw material concentration sensor (44), the apparatus comprising at least one return line (23, 25) connected between the product separator (24) and the feed line (4) for returning raw material to the feed line, a second raw material flow regulator in the return line (23, 25), and flow summing means (62; 90) connected to the first-mentioned and second raw material flow regulators for determining a total amount of raw material supplied to the feed line, the flow summing means being connected to the production rate control means (46; 90) for providing the production rate control means with a total flow value for raw material to the feed line (4).

5. Apparatus according to claim 4, including catalyst supply means (56 etc) connected to at least one point (A, B) of the feed line for supplying a catalyst at a selected catalyst flow rate to the feed line, and catalyst control means (50; 90) connected to the catalyst supply means and to the flow summing means (62; 90) for controlling the catalyst supply means in accordance with a total flow of raw material to the feed line (4).

6. Apparatus according to claim 5, wherein:

the production rate control means, the quality control means and the catalyst control means are constituted by a control computer (90);

the temperature sensing means comprises a plurality of temperature sensors (30) connected to the reactor (10) for sensing temperatures along the reactor, an input temperature sensor (32) connected to the feed line (4) for sensing the temperature of raw material to the reactor, an output temperature sensor (33) connected to the exit line (8) for sensing the temperature of material in the exit line, and a maximum temperature block (93) for determining the maximum temperature of the reactor, the maximum temperature block (93) being incorporated in the control computer (90);

the flow summing means includes a flow transmitter (12) in the feed line, a flow transmitter (FT) in the at least one return line (23, 25), and means for combining flow values incorporated into the control computer (90); and

the control computer (90) includes a unit conversion block (92) for receiving signals from the temperature sensors (30, 32, 33) and flow transmitters (12, FT) and signals from the raw material concentration sensor (44) and the product quality sensor (22), a continuous running average block (96) connected to the maximum temperature block (93) and the unit conversion block (92) for periodically sampling signals from the unit conversion block and the maximum temperature block, an optimisation block (98) connected to the continuous running average block (96) for receiving the sampled signals and receiving the desired product quality set point, and a process model (99) including parameters for variables of the polymerisation process in the reactor (10) and connected to the optimisation block (98) so that the optimisation block (98) generates values corresponding to maximum reactor temperature, maximum coolant flow rate, maximum total catalyst flow rate and maximum production of the reactor corresponding to optimal conditions therefor, the optimisation block (98) being connected to the production rate control means for applying the maximum production rate value thereto to control the raw material flow regulator (14, 16), and the optimisation block (98) being connected to the catalyst control means for applying said maximum catalyst flow rate thereto to control the amount of catalyst added to the feed line (4).

7. Apparatus according to claim 6, wherein the control computer (90) includes a limit checking block (97) connected to the unit conversion block (92), the continuous running average block (96), the maximum temperature block (93) and the optimisation block (98) for checking limits of values therefrom and generating an alarm signal upon diversion of signals from the limits therefor.

8. Apparatus according to claim 1, claim 2 or claim 3, for controlling a tubular olefin polymerisation reactor (10) having at least one compressor (52, 54) in the feed line (4) for compressing the olefin, and at least one return line (23, 25) for returning separated olefin to the feed line (4) upstream of the at least one compressor (52, 54), and wherein the temperature control means (26) is connected to the quality control means (20; 90) for receiving desired temperature set point therefrom, the apparatus comprising:

a first flow transmitter (12) in the feed line (4) for sensing flow of olefin to the reactor (10);

at least one second flow transmitter (FT) in the return line (23, 25) for sensing flow of olefin returned from the separator (24);

flow means connected to the reactor (10) for supplying the reactor with a flow of coolant;

a coolant flow controller (38) connected to the coolant flow means;

a maximum temperature sensing means (30, 34; 30, 93) connected to the reactor (10) for determining the maximum temperature thereof, the maximum temperature sensing means being connected to the temperature control means (26), and the temperature control means (26) being operative to compare the maximum temperature with the desired temperature set point to control the coolant flow controller (28) for establishing the desired temperature of the desired temperature set point in the reactor to avoid overcooling of the reactor and fouling of the reactor by polymerisation product;

catalyst supply means (56, etc) connected to at least one point (A, B) on the feed line (4) for supplying a flow of catalyst to the feed line; and

catalyst control means (50; 90) connected to the first and second flow transmitters (12, FT) and connected to the catalyst supply means (56, etc) for regulating flow of catalyst to the feed line (4) as a function of olefin flow to the feed line.

9. Apparatus according to claim 1, claim 2 or claim 3, for optimally controlling a tubular olefin polymerisation reactor (10) having at least one olefin return line (23, 25) connected between the separator (24) and the feed line (4) for returning olefin to the feed line, and at least one compressor (52, 54) on the feed line (4) for compressing olefin to be supplied to the reactor (10), the apparatus comprising:

a first flow transmitter (12) on the feed line (4);

a second flow transmitter (FT) on the at least one olefin return line (23, 25);

catalyst supply means (56, etc) including a catalyst flow valve connected to the feed line (4) for supplying catalyst to the feed line;

a catalyst flow controller (66, 68) connected to the catalyst flow valve for control thereof;

a first temperature sensor (32) in the feed line (4) upstream of the reactor (10), a second temperature sensor (33) in the exit line (8) between the reactor (10) and the separator (24) and a plurality of third temperature sensors (30) connected to the reactor (10); and

a control computer (90) connected over analog to digital converters (88) to each of the sensors (32, 33, 30) and transmitters (12, FT), and connected over digital to analog converters (89) to each of the controllers (14, 66, 68), the control computer (90) including means (98) for optimising once through polymer production in the reactor (10) by maximising permitted maximum temperature values for the reactor, coolant flow values for the reactor, catalyst flow values for the reactor and quality values for the reactor.

10. Apparatus according to claim 8 or claim 9, wherein the raw material flow regulator comprises an olefin flow valve (16) in the feed line (4) for controlling the flow of olefin to the reactor (10), and an olefin flow controller (14) connected to the olefin flow valve (16) for controlling flow of olefin supplied through the feed line (4).

**Patentansprüche**

1. Polymerisationsreaktorsteuerapparat (10) mit einer Zufuhrleitung (4) für ein zu polymerisierendes Rohmaterial, einer Kühleinrichtung zum Kühlen des Reaktors unter Verwendung eines Kühlmittelflusses und einer Ausgangsleitung (8) für ein Polymerisationsprodukt in dem Reaktor, wobei der Apparat aufweist:

einen Produktabscheider (24), welcher in der Ausgangsleitung (8) stromabwärts von dem Reaktor (10) angeschlossen ist zum Abscheiden des Produktes von dem Rohmaterial;

einen Qualitätssensor (22) zum Abfühlen der jeweiligen Qualität des Produktes in der Ausgangsleitung (8) stromabwärts von dem Produktabscheider (24);

eine Qualitätssteuereinrichtung (20; 90), welche mit dem Qualitätssensor (22) verbunden ist zum Empfang eines gewünschten Produktqualitäts-Sollwertes und zum Vergleich desselben mit der aktuellen Qualität des Produktes, um einen gewünschten Temperaturwert des Reaktors zu erzeugen;

Temperaturfühlereinrichtungen (30, 34; 30, 93), welche mit dem Reaktor (10) verknüpft sind, um dessen charakteristische Temperatur abzufühlen;

eine Temperatursteuereinrichtung (26), welche mit den Temperaturfühlereinrichtungen und der Qualitätssteuereinrichtung verbunden ist zum Vergleich der charakteristischen Temperatur des Reaktors mit dem für diesen gewünschten Temperaturwert, um einen Kühlmittelflußwert zu erzeugen, wobei die Temperatursteuereinrichtung mit der Kühleinrichtung zum Steuern des Kühlmittelflusses zu dem Reaktor entsprechend dem Kühlmittelflußwert verbunden ist;

einem Rohmaterialflußregulierer (14, 16) in der Zuführleitung (4) zum Regulieren einer Rohmaterialmenge, welche dem Reaktor (10) zugeführt wird;

einen Rohmaterialkonzentrationsfühler (44) in der Ausgangsleitung (8) zwischen dem Reaktor (10) und dem Produktabscheider (24) zum Abfühlen einer Rohmaterialmenge, welche dem Produkt in der Ausgangsleitung beigemischt ist; und

eine Produktionsratensteuereinrichtung (46; 90), welche mit dem Rohmaterialkonzentrationssensor (44) und dem Rohmaterialflußregulierer (14, 16) verbunden ist zum Empfang einer gewünschten Produktionsrate als Sollwert und zum Vergleich desselben mit einer aktuellen Produktionsrate, welche als Funktion der Rohmaterialkonzentration bestimmt wird, um einen Wert für die Zuflußrate des Rohmaterials zu erzeugen zur Verwendung für den Rohmaterialflußregulierer zum Regulieren der Rohmaterialmenge für den Reaktor.

2. Apparat nach Anspruch 1, wobei die Temperaturfühlereinrichtungen (30, 34; 30, 93) so betreibbar sind, daß sie eine Maximaltemperatur des Reaktors (10) abfühlen, welche dessen charakteristische Temperatur bildet.

3. Apparat nach Anspruch 1 oder 2, wobei der Qualitätssensor (22) so betreibbar ist, daß er eine Konzentration von Rohmaterial in der Ausgangsleitung (8) als Maß der jeweiligen Produktqualität abfühlt.

4. Apparat nach einem der Ansprüche 1 bis 3, wobei der Produktabscheider (24) mit der Ausgangsleitung (8) stromabwärts von dem Rohmaterialkonzentrationssensor (44) verbunden ist, der Apparat zumindest eine Rückführleitung (23, 25) aufweist, welche zwischen dem Produktabscheider (24) und der Zuführleitung (4) angeschlossen ist zum Zurückführen von Rohmaterial zu der Zuführleitung, einen zweiten Rohmaterialflußregulierer in der Rückführleitung (23, 25) und eine Flußsummierungseinrichtung (62; 90) aufweist, welche mit an dem zuerst erwähnten und dem zweiten Rohmaterialflußregulierer zum Festlegen einer Gesamtmenge von Rohmaterial verbunden ist, welches der Zuführleitung zugeführt wird, wobei die Flußsummierungseinrichtung an die Produktionsratensteuereinrichtung (46; 90) angeschlossen ist, um die Produktionsratensteuereinrichtung mit einem Gesamtflußwert von Rohmaterial zu der Zuführleitung (4) zu versehen.

5. Apparat nach Anspruch 4, welcher einschließt: eine Katalysatorzufuhreinrichtung (56 etc.), welche an mindestens einem Punkt (A, B) der Zuführleitung angeschlossen ist für die Zufuhr eines Katalsators mit einer ausgewählten Katalysatorflußrate zu der Zuführleitung, und eine Katalysatorsteuereinrichtung (50; 90), welche mit der Katalysatorzufuhreinrichtung und der Flußsummierungseinrichtung (62; 90) verbunden ist zum Steuern der Katalysatorzufuhreinrichtung entsprechend dem Gesamtfluß von Rohmaterial zu der Zuführleitung (4).

6. Apparat nach Anspruch 5, wobei:

die Produktionsratensteuereinrichtung, die Qualitätskontrolleinrichtung und die Katalysatorsteuereinrichtung von einem Steuercomputer (90) gebildet werden;

die Temperaturfühlereinrichtungen eine Mehrzahl von Temperatursensoren (30) aufweisen, welche mit dem Reaktor (10) verbunden sind zum Abfühlen der Temperaturen entlang des Reaktors, einen Eingangstemperatursensor (32) aufweist, welcher an die Zuführleitung (4) angeschlossen ist zum Abfühlen der Temperatur des Rohmaterials zu dem Reaktor, einen Ausgangstemperatursensor (33) aufweist, welcher an die Ausgangsleitung (8) angeschlossen ist zum Abfühlen der Temperatur des Materials in der Ausgangsleitung, und einen Maximaltemperaturblock (93) aufweist zum Bestimmen der Maximaltemperatur des Reaktors, wobei der Maximaltemperaturblock (93) in den Steuercomputer (90) eingearbeitet ist;

die Flußsummierungseinrichtung einen Flußübertrager (12) in der Zuführleitung einschließt, sowie einen Flußübertrager (FT) in zumindest einer Rückführleitung (23, 25) und einer Einrichtung zum Kombinieren der Flußwerte, welche in den Steuercomputer (90) eingearbeitet ist; und

der Steuercomputer (90) einschließt: einen Einheitsumsetzungsblock (92) zum Empfang der Signale von den Temperaturfühlern (30, 32, 33) und den Flußübertragern (12, FT) und der Signale von dem Rohmaterialkonzentrationssensor (44) und dem Produktqualitätssensor (22), einen kontinuierlich laufenden Mittelungsblock (96), welcher mit dem Maximaltemperaturblock (93) und dem Einheitsumsetzungsblock (92) verbunden ist zum periodischen Abtasten der Signale von dem Einheitsumsetzungsblock und dem Maximaltemperaturblock, einen Optimierungsblock (98), welcher mit dem kontinuierlich laufenden Mittelungsblock (96) verbunden ist zum Empfang der abgetasteten Signale und zum Empfang des gewünschten Produktqualitäts-Sollwertes, und ein Verfahrensschema (99), welches Parameter für Variable des Polymerisationsverfahrens in dem Reaktor (10) enthält und mit dem Optimierungsblock (98) verbunden ist, so daß der Optimierungsblock (98) Werte erzeugt, welche der maximalen Reaktortemperatur, der maximalen Kühlmittelflußrate, der maximalen Gesamtflußrate für den Katalysator und der maximalen Produktion des Reaktors entsprechend optimalen Bedingungen hierfür entspricht, wobei der Optimierungsblock (98) mit der Produktionsratensteuereinrichtung verbunden ist zum Verwenden des maximalen Produktsratenwertes für diese zum Steuern des Rohmaterialfließregulierers (14, 16) und wobei der Optimierungsblock (98) mit der Katalysatorsteuereinrichtung verbunden ist zum Verwenden der maximalen Katalysatorflußrate für diese zum Steuern der Katalysatormenge, welche der Zuführleitung (4) zugefügt wird.

7. Apparat nach Anspruch 6, wobei der Steuer-

computer (90) einschließt: einen Grenzwertüberwachungsblock (97), welcher mit dem Einheitsumsetzungsblock (92), dem kontinuierlich laufenden Mittelungsblock (96), dem Maximaltemperaturblock (93) und dem Optimierungsblock (98) verbunden ist zum Überprüfen von deren Grenzwerten und zum Erzeugen eines Alarmsignals, wenn Signale ihre Grenzwerte überschreiten.

8. Apparat nach Anspruch 1, 2 oder 3 zum Steuern eines rohrförmigen Olefinpolymerisationsreaktors (10), welcher zumindest einen Kompressor (52, 54) in der Zufuhrleitung (4) zum Zusammenpressen des Olefins sowie mindestens eine Rückfuhrleitung (23, 25) hat zu Zurückführen des abgetrennten Olefins zu de Zufuhrleitung (4) stromaufwärts von mindestens einem Kompressor (52, 54) und wobei die Temperatursteuereinrichtung (26) mit der Qualitätskontrolleinrichtung (20; 90) verbunden ist zum Empfang eines gewünschten Temperatursollwertes von dieser, wobei der Apparat aufweist:

einen ersten Flußübertrager (12) in der Zufuhrleitung (4) zum Abfühlen des Olefinflusses zum Reaktor (10);

mindestens einem zweiten Flußübertrager (FT) in der Rückführleitung (23, 25) zum Abfühlen des von dem Abscheider (24) zurückgeführten Olefinflusses;

eine Flußeinrichtung, welche mit dem Reaktor (10) verbunden ist zum Versorgen des Reaktors mit einem Kühlmittelfluß;

einen Kühlmittelflußsteuerer (38), welcher mit der Kühlmittelflußeinrichtung verbunden ist;

eine Maximaltemperaturabfühleinrichtung (30, 34; 30, 93), welche mit dem Reaktor (10) verbunden ist zum Bestimmen von dessen Maximaltemperatur, wobei die Maximaltemperaturabfühleinrichtung mit der Temperatursteuereinrichtung (26) verbunden ist, und die Temperatursteuereinrichtung (26) so betreibbar ist, daß sie die Maximaltemperatur mit dem gewünschten Temperatursollwert vergleicht, um die Kühlmittelflußsteuerung (38) zu steuern, um die gewünschte Temperatur des gewünschten Temperatursollwertes in dem Reaktor einzustellen, um ein zu starkes Kühlen des Reaktors und ein Verkrusten des Reaktors mit Polymerisationsprodukt zu vermeiden;

eine Katalysatorzufuhreinrichtung (56 etc.), welche an mindestens einem Punkt (A, B) an der Zufuhrleitung (4) für die Zufuhr eines Katalysatorflusses zu der Zufuhrleitung angeschlossen ist; und

eine Katalysatorsteuereinrichtung (50; 90), welche an den ersten und den zweiten Flußübertrager (12, FT) sowie an die Katalysatorzufuhreinrichtung (56 etc.) angeschlossen ist zum Regulieren eines Katalysatorflusses zu der Zufuhrleitung (4) als Funktion des Olefinflusses in der Zufuhrleitung.

9. Apparat nach Anspruch 1, 2 oder 3 zum optimalen Steuern eines rohrförmigen Olefinpolymerisationsreaktors (10), welcher zumindest eine Olefinrückführleitung (23, 25) hat, welche zwischen dem Abscheider (24) und der Zufuhrleitung (4) angeschlossen ist, zum Rückführen von Olefin in die Zufuhrleitung sowie mindestens einen Kompressor (52, 54) an der Zufuhrleitung (4) hat zum Zusammenpressen des Olefins, welches dem Reaktor (10) zugeführt werden soll, wobei der Apparat aufweist:

einen ersten Flußübertrager (12) an der Zufuhrleitung (4);

einen zweiten Flußübertrager (FT) an der mindestens einen Olefinrückführleitung (23, 25);

eine Katalysatorzufuhreinrichtung (56 etc.), welche ein Katalysatorflußventil einschließt, das mit der Zufuhrleitung (4) verbunden ist für die Zufuhr von Katalysator zu der Zufuhrleitung;

eine Katalysatorflußsteuerung (66, 68), welche mit dem Katalysatorflußventil zur Steuerung desselben verbunden ist;

einen ersten Temperaturfühler (32) in der Zufuhrleitung (4) stromaufwärts von dem Reaktor (10), einen zweiten Temperaturfühler (33) in der Ausgangsleitung (8) zwischen dem Reaktor (10) und dem Abscheider (24) und eine Vielzahl von dritten Temperaturfühlern (30), welche an den Reaktor (10) angeschlossen sind; und

einen Steuercomputer (90), welcher über Analog/Digitalwandler (88) mit jedem der Fühler (32, 33, 30) und Übertrager (12, FT) verbunden ist und über Digital/Analogwandler mit jeder der Steuerungen (14, 66, 68) verbunden ist, wobei der Steuercomputer (90) eine Einrichtung (98) einschließt, um einmal durchgehend die Polymerproduktion in dem Reaktor (10) zu optimieren durch Maximieren der zulässigen Maximalwerte für die Temperatur des Reaktors, des Kühlmittelflusses für den Reaktor, des Katalysatorflusses für den Reaktor und der Qualitätswerte für den Reaktor.

10. Apparat nach Anspruch 8 oder 9, wobei der Rohmaterialflußregulierer ein Olefinflußventil (16) in der Zufuhrleitung (4) aufweist zum Steuern des Olefinflusses zu dem Reaktor (10) sowie eine Olefinflußsteuerung (14), welche mit dem Olefinflußventil (16) verbunden ist zum Steuern des Flusses von Olefin, welches durch die Zufuhrleitung (4) zugeführt wird.

**Revendications**

1. Appareil en vue de commander un réacteur de polymérisation (10) possédant une canalisation d'alimentation (4) pour une matière première à polymériser, des moyens de refroidissement en vue de refroidir le réacteur en utilisant une circulation de réfrigérant, et une canalisation de sortie (8) pour un produit de polymérisation dans le réacteur, appareil comportant:

un séparateur de produit (24) raccordé à la canalisation de sortie (8) en aval du réacteur (10) en vue de séparer le produit de la matière première;

un capteur de qualité (22) en vue de détecter la qualité réelle du produit dans la canalisation de sortie (8) en aval du séparateur de produit (24);

des moyens de contrôle de qualité (20; 90) raccordés au capteur de qualité (22) en vue de recevoir un point de consigne de qualité de produit désirée et en vue de la comparer à la qualité réelle du produit pour engendrer une valeur de température désirée du réacteur;

des moyens de détection de température (30, 34; 30, 93) associés au réacteur (10) pour détecter une température représentative de celui-ci;

des moyens de commande de température (26) reliés aux moyens de détection de température et aux moyens de contrôle de qualité en vue de comparer la température représentative du réacteur à la valeur de température désirée à cet effet pour engendrer une valeur de débit de réfrigérant, les moyens de commande de température étant reliés aux moyens de refroidissement en vue de commander le débit de réfrigérant vers le réacteur conformément à la valeur de débit de réfrigérant;

un régulateur d'écoulement de matière première (14, 16) dans la canalisation d'alimentation (4) en vue de réguler une quantité de matière première délivrée au réacteur (10);

un capteur de concentration de matière première (44) dans la canalisation de sortie (8) entre le réacteur (10) et le séparateur de produit (24) en vue de détecter une quantité de matière première mélangée au produit dans la canalisation de sortie; et

des moyens de contrôle de taux de production (46; 90) reliés au capteur de concentration de matière première (44) et au régulateur d'écoulement (14, 16) en vue de recevoir un taux de production désiré en tant que point de consigne et un vue de la comparer à un taux de production réel déterminé en fonction de la concentration en matière première pour engendrer une valeur de débit d'alimentation en matière première pour une application au régulateur d'écoulement de matière première en vue de réguler la quantité de matière première délivrée au réacteur.

2. Appareil selon la revendication 1, dans lequel les moyens de détection de température (30, 34; 30, 93) détectent une température maximale du réacteur (10) qui constitue la température représentative de celui-ci.

3. Appareil selon la revendication 1 ou la revendication 2, dans lequel le capteur de qualité (22) détecte une concentration de matière première dans la canalisation de sortie (8) en tant que mesure de qualité de produit réelle.

4. Appareil selon la revendication 1, la revendication 2 ou la revendication 3, dans lequel le séparateur de produit (24) est relié à la canalisation de sortie (8) en aval du capteur de concentration de matière première (44), l'appareil comportant au moins une canalisation de retour (23, 25) connectée entre le séparateur de produit (24) et la canalisation d'alimentation (4) un vue de retourner de la matière première à la canalisation d'alimentation, un second régulateur d'écoulement de matière première dans la canalisation de retour (23, 25), et des moyens de sommation d'écoulement (62; 90) reliés aux premier et second régulateurs d'écoulement de matière première en vue de déterminer une quantité total de matière première délivrée à la canalisation d'alimentation, les moyens de sommation d'écoulement étant reliés aux moyen sde contrôle de taux de production (46; 90) pour appliquer aux moyens de contrôle de taux de production une valeur de débit total de matière première vers la canalisation d'alimentation (4).

5. Appareil selon la revendication 4, comprenant des moyens d'alimentation en catalyseur (56 etc.) reliés à au moins un point (A, B) de la canalisation d'alimentation en vue de délivrer un catalyseur à un débit de catalyseur choisi à la canalisation d'alimentation, et des moyens de contrôle de catalyseur (50; 90) reliés aux moyens d'alimentation en catalyseur et aux moyens de sommation de débit (62; 90) en vue de contrôler les moyens d'alimentation en catalyseur conformément à un débit total de matière première vers la canalisation d'alimentation (4).

6. Appareil selon la revendication 5, dans lequel:

les moyens de contrôle de taux de production, les moyens de contrôle de qualité et les moyens de contrôle en catalyseur sont constitués par un calculateur de contrôle (90);

les moyens de détection de température comportent un ensemble de capteurs de température (30) reliés au réacteur (10) en vue de détecter des températures le long du réacteur, un capteur de température d'entrée (32) relié à la canalisation d'alimentation (4) en vue de détecter la température de matière première dirigée vers le réacteur, un capteur de température de sortie (33) relié à la canalisation de sortie (8) en vue de détecter la température du matériau dans la canalisation de sortie, et un block de température maximale (93) en vue de déterminer la température maximale du réacteur, le bloc de température maximale (93) étant incorporé au calculateur de contrôle (90);

les moyens de sommation d'écoulement comprennent un transmetteur de débit (12) dans la canalisation d'alimentation, un transmetteur de débit (FT) dans ladite au moins une canalisation de retour (23, 25), et des moyens en vue de combiner des valeurs de débit incorporés au calculateur de contrôle (90); et

le calculateur de contrôle (90) comprend un bloc de conversion d'unités (92) en vue de recevoir des signaux des capteurs de température (30, 32, 33) et des transmetteurs de débit (12, FT) et des signaux provenant du capteur de concentration de matière première (44) et du capteur de qualité de produit (22), un bloc de moyenne de déroulement continue (96) relié au bloc de température maximale (93) et au bloc de conversion d'unités (92) en vue d'échantillonner périodiquement des signaux provenant du bloc de conversion d'unités et du bloc de température maximale, un bloc d'optimisation (98) relié au bloc de moyenne de déroulement continu (96) en vue de recevoir les signaux échantillonnés et de recevoir le point de consigne de qualité de produit désirée, et un modèle de processus (99) comprenant des paramètres pour des variables du processus de polymérisation dans le réacteur (10) et relié au bloc d'optimisation (98) de sorte que le bloc d'optimisation (98) engendre des valeurs correspondant à la température de réacteur maximale, au débit maximum de réfrigérant, au débit maximum total de catalyseur et à la production maximale du réacteur correspondant à des conditions optimales à cet effet, le bloc d'optimisation (98) étant relié aux moyens de contrôle de taux de production pour y appliquer la valeur de taux de production maximum pour contrôler le régulateur d'écoulement de matière première (14, 16), et le bloc d'optimisation (98) étant relié aux moyens de contrôle de catalyseur pour y appliquer ledit débit maximum de catalyseur en vue de commander la quantité de catalyseur ajoutée à la canalisation d'alimentation (4).

7. Appareil selon la revendication 6, dans lequel le calculateur de contrôle (90) comprend un bloc de contrôle de limite (97) relié au bloc de conversion d'unités (92), au bloc de moyenne de déroulement continu (96), au bloc de température maximum (93) et au bloc d'optimisation (98) en vue de contrôler les limites de valeurs de ceux-ci et engendrer un signal d'alarme lors d'un écart des signaux par rapport aux limites à cet effet.

8. Appareil selon la revendication 1, la revendication 2 ou la revendication 3, en vue de contrôler un réacteur de polymérisation d'oléfine tubulaire (10) posédant au moins un compresseur (52, 54) dans la canalisation d'alimentation (4) pour comprimer l'oléfine, et au moins une canalisation de retour (23, 25) en vue de retourner l'oléfine séparée à la canalisation d'alimentation (4) en amont dudit au moins un compresseur (52, 54), et dans lequel les moyens de contrôle de température (26) sont reliés aux moyens de contrôle de qualité (20; 90) pour en recevoir un point de consigne de température désirée, l'appareil comportant:

un premier transmetteur de débit (12) dans la canalisation d'alimentation (4) pour détecter un débit d'oléfine vers le réacteur (10);

au moins un second transmetteur de débit (FT) dans la canalisation de retour (23, 25) pour détecter un débit d'oléfine retourné depuis le séparateur (24);

des moyens d'écoulement de réfrigérant reliés au réacteur (10) en vue d'alimenter le réacteur avec un débit de réfrigérant;

un contrôleur de débit de réfrigérant (38) relié aux moyens d'écoulement de réfrigérant;

des moyens de détection de température maximum (30, 34; 30, 93) reliés au réacteur (10) en vue de déterminer la température maximale de celui-ci, les moyens de détection de température maximum étant reliés aux moyens de contrôle de température (26), et les moyens de contrôle de température (26) agissant en vue de comparer la température maximum au point de consigne de température désirée pour commander le contrôleur de débit de réfrigérant (38) pour établir la température désirée du point de consigne de température désirée dans le réacteur afin d'éviter un surrefroidissement du réacteur et l'encrassement de celui-ci par le produit de polymérisation;

des moyens d'alimentation en catalyseur (56,

etc.) reliés à au moins un point (A,B) sur la canalisation d'alimentation (4) en vue de délivrer un débit de catalyseur à la canalisation d'alimentation;

des moyens de contrôle de catalyseur (50; 90) reliés aux premier et second transmetteurs de débit (12, FT) et reliés aux moyens d'alimentation en catalyseur (56, etc.) pour réguler le débit de catalyseur vers la canalisation d'alimentation (4) en fonction du débit d'oléfine vers la canalisation d'alimentation.

9. Appareil selon la revendication 1, la revendication 2 ou la revendication 3, en vue de contrôler de façon optimale un réacteur de polymérisation d'oléfine tubulaire (10) possédant au moins une canalisation de retour d'oléfine (23, 25) montée entre le séparateur (24) et la canalisation d'alimentation (4) en vue de retourner l'oléfine à la canalisation d'alimentation, et au moins un compresseur (52, 54) sur la canalisation d'alimentation (4) pour comprimer l'oléfine à délivrer au réacteur (10), l'appareil comportant:

un premier transmetteur de débit (12) sur la canalisation d'alimentation (4);

un second transmetteur de débit (FT) sur ladite au moins une canalisation de retour d'oléfine (23, 25);

des moyens d'alimentation en catalyseur (56, etc.) comprenant une soupape d'écoulement de catalyseur reliée à la canalisation d'alimentation (4) en vue de délivrer un catalyseur à la canalisation d'alimentation;

un contrôleur de débit de catalyseur (66, 68) relié à la soupape de catalyseur pour son contrôle;

un premier capteur de température (32) dans la canalisation d'alimentation (4) en amont du réacteur (10), un second capteur de température (33) dans la canalisation de sortie (8) entre le réacteur (10) et le séparateur (24) et un ensemble de troisièmes capteurs de température (30) reliés au réacteur (10); et

un calculateur de contrôle (90) relié par l'intermédiaire de convertisseurs analogiques- numériques (88) à chacun des capteurs (32, 33, 30) et des transmetteurs (12, FT), et relié par l'intermédiaire de convertisseurs numériques- analogiques (89) à chacun des contrôleurs (14, 66, 68), le calculateur de contrôle (90) comprenant des moyens (98) en vue d'optimiser une production de polymère par un seul passage dans le réacteur (10) en maximisant les valeurs de température maximum permises pour le réacteur, les valeurs d'écoulement de réfrigérant pour le réacteur, les valeurs d'écoulement de catalyseur pour le réacteur et les valeurs de qualité pour le réacteur.

10. Appareil selon la revendication 8 ou la revendication 9, dans lequel le régulateur d'écoulement de matière première comporte une soupape d'oléfine (16) dans la canalisation d'alimentation (4) en vue de contrôler le débit d'oléfine vers le réacteur (10), et un contrôleur de débit d'oléfine (14) relié à la soupape d'écoulement d'oléfine (16) en vue de contrôler un écoulement d'oléfine délivrée par l'intermédiaire de la canalisation d'alimentation (4).

FIG. 1

L.P. RECYCLE GAS — 23

H.P. RECYCLE GAS — 25

REACTOR

SEP. UNIT

FLOW CONTROL

MAX. TEMP.

TEMP. CONTROL

FLOW CONTROL

CATALYST CONTROL

QUALITY CONTROL

PRODUC. CONTROL

SET PT.

SET POINT

EP 0 124 333 B1

FIG. 2

FIG. 3

FROM LOW PRESS. SEPARATOR — 23
FROM HIGH PRESS. SEPARATOR — 25

EP 0 124 333 B1

| RECYCLE GAS LOW PRESS. SEP. | RECYCLE GAS HIGH PRESS. SEP. | FEED STREAM | CATALYST FLOW | ETHYLENE CON. IN REACTOR EXIT |

**FIG. 4**

FEED FLOW CONTROL VALVE

CATALYST FLOW CONTROL VALVE A

CATALYST FLOW CONTROL VALVE B

CONTROLLER MODULE #1

CONTROLLER MODULE #2

FIG. 5

PRODUCT QUALITY

REACTOR TEMPERATURES

COOLANT FLOW

EP 0 124 333 B1

ALARM/DISPLAY EMERGENCY CONTROL LOGIC

FIG. 6

EP 0 124 333 B1

FIG. 7

TO TEMP. CONTROLLER (26)

TO DISPLAY

TO CATALYST FLOW CONTROLLERS (66,68)

(TO COOLANT FLOW CONTROLLER)
TO TEMPERATURE CONTROLLER (38)

TO FEED FLOW CONTROLLER (14)

TO DISPLAY/ALARM EMERGENCY CONT. SYSTEMS

CONTROL COMP. SYS.  90

REACTOR TEMPERATURES

MAXIMUM TEMPERATURE  93

92  ENGINEERING UNIT CONVERSION

96  CONTINUOUS RUNNING AVERAGE

99  PROCESS MODEL

95  CATALYST FLOW INDIVIDUAL POINTS  $F_{ci}$

98  OPTIMIZATION  $\overline{X}_P$  $\overline{F}_C$  $\overline{F}_{cj}$  $\overline{T}_M$  $\overline{T}_2$

91  FEED FLOW  $F_f$

97  LIMIT CHECKING

94

PROCESS SIGNALS

QUALITY SET POINT

PRODUCTION RATE SET POINT

7